Europäisches Patentamt

(19) European Patent Office

Office européen des brevets

(11) Numéro de publication : **0 096 608**
**B1**

# (12) FASCICULE DE BREVET EUROPÉEN

(45) Date de publication du fascicule du brevet :
21.01.87

(51) Int. Cl.⁴ : **G 02 B    6/32**

(21) Numéro de dépôt : **83401015.9**

(22) Date de dépôt : **20.05.83**

(54) **Collimateur pour fibre optique, application à la réalisation de dispositifs de commutation optique.**

(30) Priorité : **28.05.82 FR 8209372**

(43) Date de publication de la demande :
**21.12.83 Bulletin 83/51**

(45) Mention de la délivrance du brevet :
**21.01.87 Bulletin 87/04**

(84) Etats contractants désignés :
**BE CH DE GB IT LI NL SE**

(56) Documents cités :
**FR-A- 2 331 803**
**GB-A- 1 576 336**

(73) Titulaire : **Gentric, Alain**
**27, Lotissement Keranroux**
**F-22300 Lannion, Ploubezre (FR)**

(72) Inventeur : **Gentric, Alain**
**27, Lotissement Keranroux**
**F-22300 Lannion, Ploubezre (FR)**

(74) Mandataire : **Mongrédien, André et al**
**c/o BREVATOME 25, rue de Ponthieu**
**F-75008 Paris (FR)**

## Description

La présente invention concerne un collimateur pour fibre optique. Elle s'applique notamment à la réalisation de dispositifs de commutation optique.

On connaît des dispositifs de commutation optique comprenant une matrice d'organes de déflexion de lumière escamotable et des collimateurs associés aux rangées de cette matrice. Chaque collimateur est pourvu d'une fibre optique destinée à l'émission et/ou à la réception d'un faisceau lumineux. Les collimateurs ont pour fonction de maîtriser ces faisceaux lumineux quant à leur direction et leur parallélisme, de façon à pouvoir injecter un maximum de lumière de toute fibre émettrice dans une fibre réceptrice.

Or, les collimateurs commercialement disponibles, par exemple ceux qui comportent des dispositifs à micro-déplacements, sont très encombrants et ne permettent pas de réaliser des dispositifs de commutation optique suffisamment compacts, comportant des matrices dont le pas, c'est-à-dire l'intervalle séparant deux fibres optiques adjacentes, serait suffisamment faible, par exemple de l'ordre de 10 mm.

La présente invention a pour but de remédier à cet inconvénient.

On connaît déjà, par le document FR-A-2 331 803, un organe de couplage comprenant un moyen de maintien d'une extrémité de fibre optique et un moyen optique placé en regard de cette extrémité et apte à transformer un faisceau lumineux issu de la fibre en un faisceau lumineux sensiblement parallèle.

La présente invention a pour objet un collimateur pour fibre optique, comprenant :

un moyen de maintien d'une extrémité de fibre optique, et

un moyen optique rendu fixe par rapport au moyen de maintien, en étant positionné en regard de l'extrémité de la fibre optique de façon telle qu'il puisse transformer un faisceau lumineux issu de cette dernière en un faisceau lumineux sensiblement parallèle dont l'axe coïncide avec celui de cette extrémité de fibre, caractérisé en ce que le moyen de maintien comporte un logement longitudinal en forme de V au fond duquel est maintenue l'extrémité de la fibre optique, et en ce que ledit collimateur comporte en outre un support prévu pour recevoir de manière amovible le moyen de maintien, ce support comportant deux faces planes délimitant un dièdre convexe en forme de V de même angle d'ouverture que celui du logement en V du moyen de maintien, de façon à assurer la réception dudit moyen de maintien sur le support par emboîtement des faces planes du dièdre en V dudit support contre les faces latérales correspondantes du logement en V du moyen de maintien, les faces planes délimitant le dièdre du support étant par ailleurs usinées à leur intersection de façon que le support ne puisse entrer en contact avec la fibre lorsque ce dernier est emboîté dans le logement en V du moyen de maintien, d'où il résulte que l'axe de ladite extrémité de fibre optique, et par conséquent celui du faisceau parallèle émergeant dudit moyen optique, sont ainsi susceptibles de s'étendre le long d'une direction bien définie par rapport audit support, parallèle à l'arête du dièdre de ce dernier.

Dans une réalisation préférée de l'invention, la position relative de l'extrémité de la fibre et du moyen optique est celle qui minimise, à une distance donnée du moyen optique, la section transversale du faisceau lumineux issu de la fibre et transformé par ce moyen optique.

La fibre optique est par exemple maintenue dans le logement à l'aide d'une plaquette appuyant sur cette fibre et collée sur le moyen de maintien ou à l'aide d'une lame élastique et cambrée qui est rendue solidaire du moyen de maintien et qui appuie sur la fibre.

Un moyen de fixation peut être prévu pour tenir le moyen de maintien sur ledit support ; il s'agit par exemple d'une lame-ressort fixée à ce support et qui appuie sur le moyen de maintien lorsque celui-ci repose sur le support. La partie du collimateur comportant le moyen de maintien, le moyen optique et la fibre optique est alors amovible et peut être placée sur tout support identique au précédent.

Le collimateur objet de l'invention permet d'une part de maîtriser la direction d'un faisceau lumineux issu de la fibre optique et transformé par le moyen optique. En effet, la fixation du support du collimateur sur une plaque de référence permet d'imposer audit faisceau lumineux une direction constante : cette direction demeure inchangée après avoir ôté puis replacé le moyen de maintien sur ce support. Le collimateur objet de l'invention peut permettre d'autre part de maîtriser le parallélisme dudit faisceau à sa sortie du moyen optique. On a en effet indiqué que le moyen optique est apte à transformer un faisceau issu de la fibre optique en un faisceau sensiblement parallèle. Ce faisceau n'est jamais rigoureusement parallèle : il présente une légère divergence et la section transverse en un point de ce faisceau augmente avec la distance de ce point au moyen optique. C'est ainsi que, avant de rendre ce moyen optique fixe par rapport au moyen de maintien, l'on peut régler la position relative de ces moyens de manière à minimiser ladite section transverse à une distance donnée au moyen optique. On peut dire, de façon équivalente, que le réglage est effectué de manière à injecter un maximum de lumière dudit faisceau dans une autre fibre optique située à ladite distance du moyen optique et placée dans le prolongement du faisceau.

Le collimateur objet de l'invention permet de réaliser des dispositifs de commutation optique compacts, pourvus d'une matrice de commutation de faible pas : par exemple une matrice de pas égal à 10 mm, pour des faisceaux lumineux de 5 mm de diamètre.

Selon une caractéristique particulière du collimateur pour fibre optique objet de l'invention, ce collimateur comprend en outre un fourreau contenant le moyen de maintien et ouvert de manière à laisser apparaître ledit logement et le moyen optique est fixé à ce fourreau. Ledit fourreau peut être fixé au moyen de maintien une fois ladite section transverse minimisée, le minimum de cette section étant déterminé grâce à des déplacements du fourreau par rapport au moyen de maintien.

Selon un mode de réalisation particulier de ce collimateur, le moyen de maintien, le logement et le fourreau sont rectilignes et orientés selon un même axe, le logement débouche sur une extrémité du moyen de maintien et le moyen optique est une optique convergente montée sur le fourreau, en regard de ladite extrémité et de façon que l'axe optique de cette optique convergente soit dans le prolongement de l'axe de la fibre optique maintenue dans le logement. Le moyen optique est par exemple une lentille convergente. Il peut être également, compte tenu des performances visées, une lentille plan-convexe, une lentille asphérique ou un doublet acromat convergent.

Selon un autre mode de réalisation particulier, le collimateur objet de l'invention comprend en outre un moyen pour prélever une partie dudit faisceau lumineux issu de la fibre optique et transformé par le moyen optique. Ce faisceau lumineux peut transporter des photons de différentes longueurs d'onde. Par « partie », on entend une fraction de l'intensité totale de ce faisceau ou encore les photons d'une ou de plusieurs longueurs d'onde présentes dans le faisceau, le collimateur permettant alors un démultiplexage en longueurs d'onde ; bien entendu, ce moyen de prélèvement permettrait alors également d'injecter dans la fibre optique des faisceaux lumineux de longueurs d'onde différentes.

Selon un autre mode de réalisation particulier, le collimateur objet de l'invention comprend en outre un moyen d'atténuation dudit faisceau lumineux issu de la fibre optique et transformé par le moyen optique. Bien entendu, ce moyen d'atténuation permettrait également d'atténuer un faisceau lumineux avant d'injecter ce faisceau dans la fibre optique.

Selon un mode de réalisation préféré du collimateur objet de l'invention, ledit logement est en forme de V ouvert à 90° et les deux faces planes dudit support sont orthogonales.

Le collimateur pour fibre optique objet de l'invention s'applique à la réalisation de dispositifs de commutation optique comprenant une matrice à M lignes et N colonnes d'organes de déflexion de lumière escamotables et une pluralité de tels collimateurs disposés en regard des lignes et des colonnes de la matrice de façon qu'un faisceau lumineux issu d'un collimateur associé à une ligne de la matrice puisse parvenir à un autre collimateur associé à une colonne de la matrice, et réciproquement, grâce à l'organe de déflexion de lumière placé à l'intersection de ladite ligne et de ladite colonne.

Selon un mode de réalisation particulier de ces dispositifs de commutation optique, chaque ligne de la matrice est associée à deux collimateurs placés en regard l'un de l'autre et séparés par la matrice, de façon à pouvoir réaliser des communications optiques entre les fibres optiques des collimateurs associés aux lignes de la matrice et placés d'un côté de la matrice et les fibres optiques des collimateurs associés aux colonnes de la matrice, et des communications optiques entre les fibres desdits collimateurs associés aux lignes de la matrice et placés dudit côté de cette matrice et les fibres des collimateurs également associés aux lignes de la matrice et placés de l'autre côté de cette matrice.

L'invention sera mieux comprise à la lecture de la description qui suit d'exemples de réalisation et d'application donnés à titre indicatif et non limitatif, en référence aux dessins annexés, sur lesquels :

la figure 1 est une vue schématique en perspective d'un mode de réalisation particulier du moyen de maintien de la fibre optique ;

la figure 2 est une vue en coupe de la figure 1 ;

les figures 2A et 2B sont des vues schématiques d'un montage prévu pour le positionnement de la fibre dans le moyen de maintien représenté sur les figures 1 et 2 ;

la figure 3 est une vue schématique en perspective d'un autre mode de réalisation particulier du moyen de maintien de la fibre optique, et de clés pour la mise en place de cette fibre ;

la figure 4 est une vue en coupe de la figure 3, montrant les clés dans une position permettant cette mise en place ;

la figure 5 est une vue en coupe de la figure 3, une fois la fibre optique immobilisée dans le moyen de maintien ;

la figure 6 est une vue schématique du moyen de maintien représenté sur la figure 1, mis en place sur le support ;

la figure 7 est une vue schématique d'un mode de réalisation particulier du collimateur objet de l'invention ;

la figure 8 est une vue de gauche schématique d'une partie du collimateur de la figure 7 ;

la figure 9 est une vue schématique d'une partie du collimateur représenté sur la figure 7, placé sur un banc optique de réglage ;

la figure 10 est une vue schématique de doigts prévus pour le positionnement du moyen optique ;

la figure 11 est une vue en coupe de la figure 9, montrant un bouton prévu pour le réglage de la position relative du moyen optique et du moyen de maintien ;

les figures 12A et 12B sont des vues schématiques dudit banc optique de réglage ;

la figure 13 est une vue de dessus schématique d'un dispositif de commutation optique comportant des collimateurs selon l'invention ; et

la figure 14 est une vue schématique en perspective de ce dispositif de commutation optique.

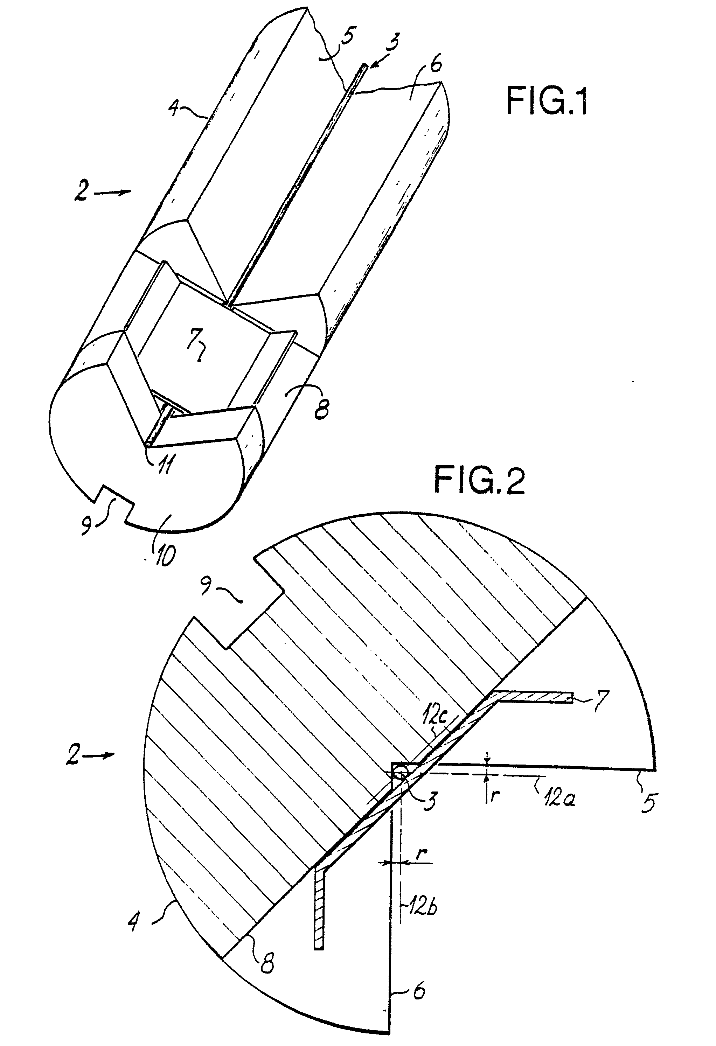

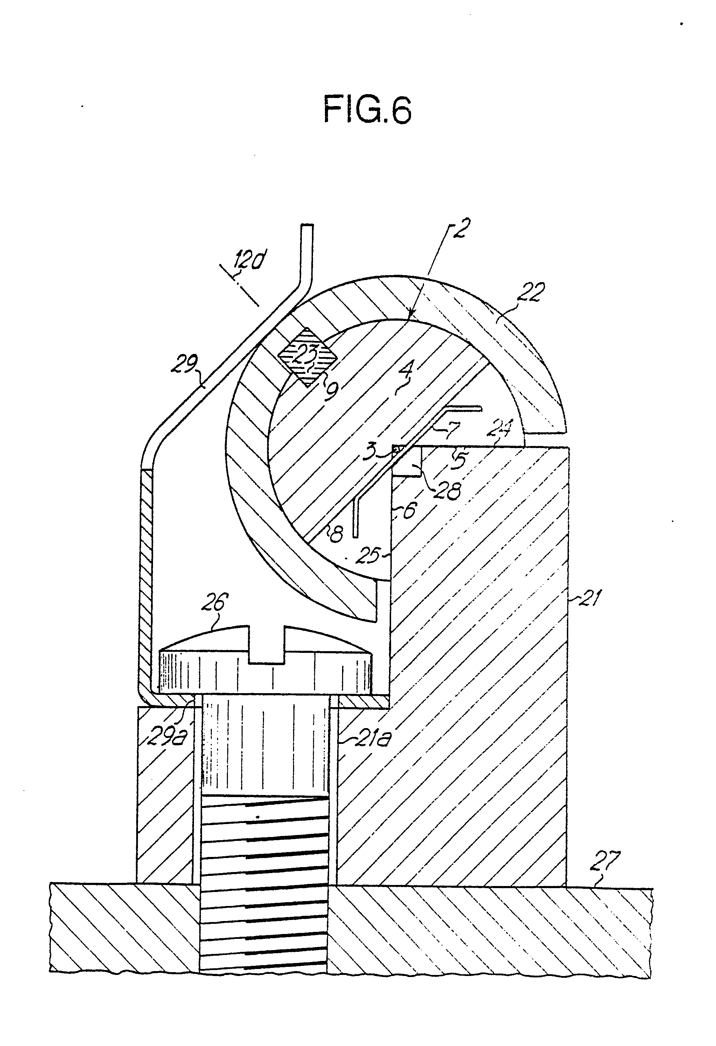

Sur la figure 1, on a représenté schématiquement, en perspective, un mode de réalisation particulier du moyen 2 de maintien de la fibre optique 3. Ce moyen 2 de maintien comporte un corps 4 de forme allongée, dans le sens de la longueur duquel est pratiqué un logement en V ouvert à 90°, délimité par deux plans 5 et 6 orthogonaux. La fibre optique 3 est maintenue au fond dudit logement par une plaquette 7 appuyant sur la fibre 3 et fixée, par exemple par collage, sur un méplat 8 pratiqué dans le corps 4 de façon à être tangent à la fibre 3 lorsque celle-ci repose au fond dudit logement. La plaquette 7 est relevée sur ses bords de manière à être manipulée aisément. Le corps 4 comporte une rainure longitudinale 9 servant au guidage en translation et au blocage en rotation du moyen 2 de maintien dans son fourreau, comme on le verra dans la description de la figure 6.

Le corps 4 a une extrémité 10 plane et perpendiculaire aux deux plans 5 et 6 orthogonaux. Cette extrémité 10 représente également l'extrémité du moyen 2 de maintien. Un montage représenté sur les figures 2A et 2B et pourvu d'une butée 82 non polluante, c'est-à-dire ne rayant pas la fibre optique 3, permet de positionner longitudinalement, grâce à ladite butée, l'extrémité 11 de la fibre 3 dans le plan de l'extrémité 10 du corps 4. La butée en question est par exemple en téflon. Ce positionnement est bien entendu réalisé avant l'immobilisation de la fibre par la plaquette.

Le moyen 2 de maintien est défini plus précisément sur la figure 2 qui le représente vu en coupe transversale, au niveau du méplat 8. Le corps 4 épouse la forme d'un cylindre de révolution dont l'axe est repéré sur la figure 2 par l'intersection des traces de deux plans diamétraux orthogonaux 12a et 12b et dont une partie a été ôtée pour former ledit logement. De façon connue, les deux plans 5 et 6 orthogonaux qui délimitent ce logement sont réalisés de manière que la fibre optique 3 ait un axe qui coïncide avec l'axe du cylindre lorsqu'elle est plaquée contre le fond du logement. (Dans le cas d'une fibre cylindrique de rayon r qui est par exemple égal à 62,5 $\mu$m ou 100 $\mu$m pour les fibres multimodes actuellement utilisées, chacun des deux plans 5 et 6 orthogonaux est parallèle à l'un des deux plans diamétraux 12a et 12b considérés précédemment, et situé à une distance r de ce plan diamétral).

Le méplat 8 est réalisé au voisinage de l'extrémité 10 du moyen de maintien et parallèlement à un autre plan diamétral 12c perpendiculaire au plan bi-secteur intérieur du V. Ce méplat est situé à l'opposé du fond du logement par rapport à l'axe du cylindre et à une distance de l'autre plan diamétral 12c, égale au rayon r, de façon que, une fois la plaquette 7 collée sur le méplat 8, la fibre optique 3 soit inscrite dans un volume dont la coupe transversale (figure 2) est un triangle rectangle isocèle dont les côtés correspondent aux deux plans orthogonaux 5 et 6 et à la plaquette 7. La rainure 9 est réalisée à la périphérie du corps 4, parallèlement à l'axe du cylindre et par exemple en suivant l'intersection de ladite périphérie et dudit plan bissecteur intérieur du V.

Le montage, représenté schématiquement sur les figures 2A et 2B, comprend un corps réceptacle 80 pourvu d'un alésage cylindrique horizontal ouvert à 90°, prévu pour le positionnement des moyens 2 de maintien de la fibre 3 à l'aide d'une clavette 81. A une extrémité du corps réceptacle 80 se trouve un bouton de pression (non représenté) à deux positions, qui permet soit le passage du moyen 2 de maintien de la fibre 3, soit le maintien et le verrouillage en position dudit moyen 2 de maintien contre la butée 82 non polluante. Un mors 83 de guidage à 90°, dont l'angle est chanfreiné de la valeur dudit triangle rectangle isocèle circonscrit à la fibre, oblige, par son propre poids, la fibre à se positionner au fond du logement en V du moyen 2 de maintien. Lorsque la fibre se trouve en butée, il est alors possible de la fixer au moyen d'une lamelle ou plaquette 7 enduite d'une goutte de colle, cette lamelle étant portée par un doigt mobile (non représenté).

On peut utiliser un autre montage voisin du précédent mais ne comportant pas la butée 82, pour positionner la fibre 3, celle-ci dépassant de l'extrémité 10 du moyen de maintien (figure 1). On effectue ensuite la coupe de cette fibre au ras de cette extrémité du moyen de maintien. On peut alors contrôler à l'aide d'un microscope la qualité de l'extrémité de la fibre, obtenue par la coupe que l'on a effectuée. Si nécessaire, on recommence l'opération de coupe avant d'immobiliser la fibre au fond du logement en V.

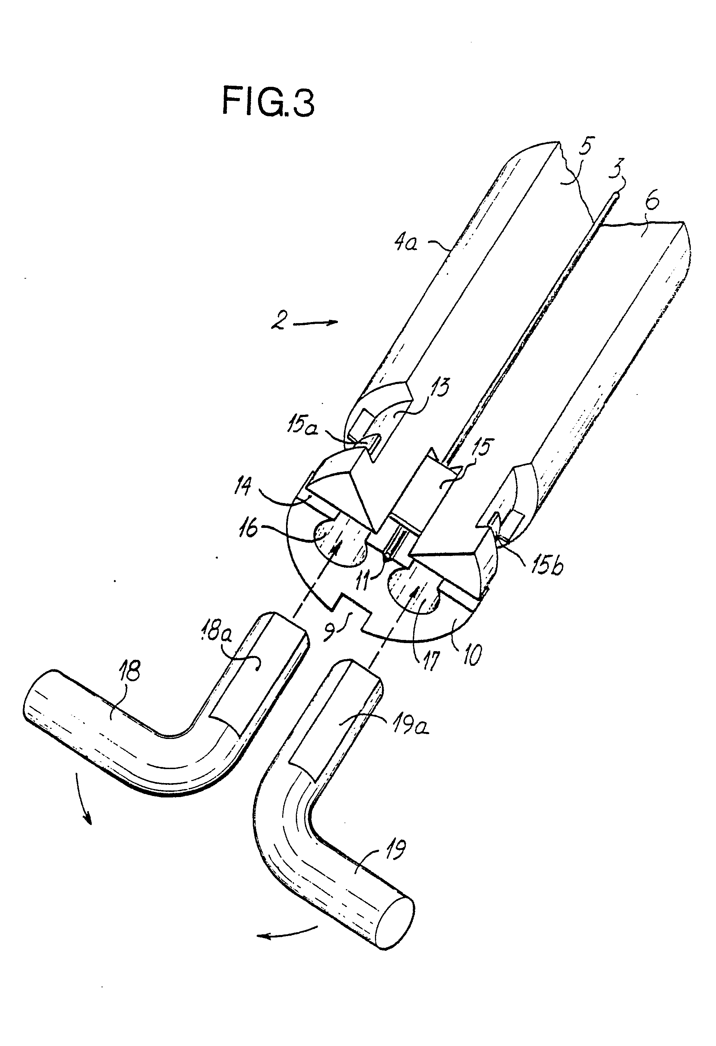

Sur la figure 3, on a représenté schématiquement, en perspective, un autre mode de réalisation particulier du moyen 2 de maintien. Il comporte un corps 4a identique au corps 4 de la figure 1 mais non pourvu du méplat 8. Au lieu de ce méplat, le corps 4a possède, au voisinage de son extrémité 10, plane et perpendiculaire aux deux plans orthogonaux 5 et 6 définissant ledit logement, une gorge annulaire 13. Cette gorge est traversée par une fente 14 débouchant sur l'extrémité 10 du corps 4a. Cette fente 14 est pratiquée dans le corps 4a, parallèlement audit autre plan diamétral 12c de la figure 2, légèrement au-dessus du fond du logement délimité par les deux plans 5 et 6 orthogonaux, de façon qu'en logeant dans cette fente 14 une lame élastique 15 courbe, d'épaisseur bien entendu plus faible que celle de la fente et de concavité tournée à l'opposé de la fibre optique 3 préalablement placée au fond dudit logement, la lame élastique 15 vienne appuyer contre la fibre. Cette lame 15 est repliée à ses deux extrémités 15a et 15b dans la gorge annulaire 13 pour éviter qu'elle ne s'échappe de la fente 14. En variante, chacune des deux extrémités de la lame 15 peut être fendue en deux parties et repliée dans la gorge 13 par seulement l'une de ces parties, comme on le voit sur la figure 3.

De façon à pouvoir manœuvrer cette lame, deux logements 16 et 17 cylindriques et de préférence identiques pour des raisons de simplicité, sont pratiqués dans le corps 14a, à partir de l'extrémité 10 de celui-ci, parallèlement à l'axe du cylindre dont le corps 4a épouse la forme, de part et d'autre du plan bissecteur intérieur du V, dans la partie du corps 4a située à l'opposé dudit logement par rapport audit autre plan diamétral 12c (figure 2) et de façon que ces logements débouchent dans la fente 14.

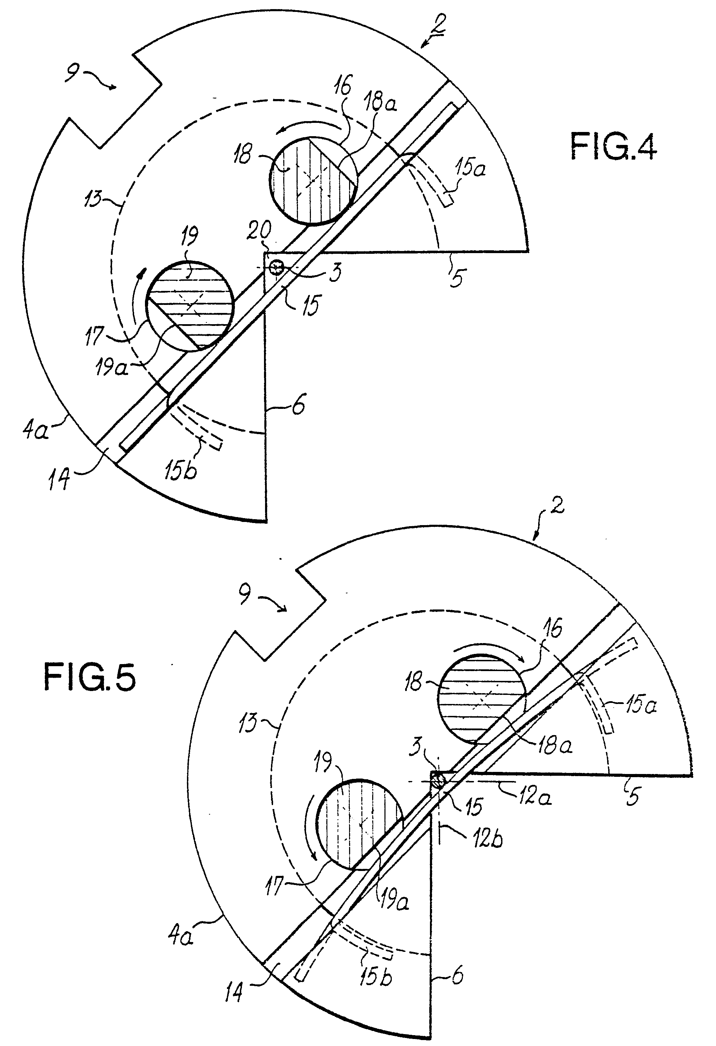

L'immobilisation de la fibre optique 3 au fond de son logement dans le moyen 2 de maintien, représenté sur la figure 3, est expliquée à l'aide des figures 4 et 5 qui sont des vues en coupe transversale de la figure 3, au niveau de la gorge 13. Le corps 4a est préalablement disposé dans un montage non représenté possédant deux clés 18 et 19 cylindriques et de même diamètre que les logements 16 et 17, qui sont prévues pour pouvoir être introduites et tournées dans ces logements et respectivement pourvues de méplats 18a et 19a à cet effet. Ces clés 18 et 19 sont courbées à leur extrémité de façon à être aisément manœuvrables. La lame 15 étant mise en place dans la fente 14, les clés 18 et 19 sont respectivement introduites dans les logements 16 et 17, les méplats 18a et 19a de ces clés étant disposés en regard de la fente 14 parallèlement à celle-ci. Les clés 18 et 19 sont ensuite simultanément tournées de façon à déformer, dans sa limite élastique, la lame 15 et à l'écarter du fond 20 du logement, comme on le voit sur la figure 4. De ce fait, la fibre optique 3 peut être facilement glissée dans l'espace délimité par les deux plans orthogonaux 5 et 6 et par la lame élastique 15. Grâce à une butée (non représentée) ne rayant pas la fibre, l'extrémité 11 de celle-ci est alors positionnée dans le plan de l'extrémité 10 du corps 4a puis les clés 18 et 19 sont remises à leur position initiale, leurs méplats 18a et 19a étant à nouveau en regard de la fente 14 et parallèles à celle-ci. La lame élastique 15 tend alors à reprendre sa forme et plaque la fibre optique 3 au fond du logement et l'y immobilise, comme le montre la figure 5. Les clés 18 et 19 sont ensuite ôtées des logements 16 et 17.

Le montage non représenté, mentionné ci-dessus, est comparable au montage représenté sur les figures 2A et 2B mais adapté à l'extrémité du moyen 2 de maintien représenté sur la figure 3. A cet effet, il est muni des deux clés mobiles 18 et 19, retenues en position selon les figures 3 et 5 au moyen de deux ressorts permettant ainsi l'introduction du moyen 2 de maintien de la fibre. La manœuvre simultanée d'un quart de tour des deux clés « ouvre » le triangle formé par le fond 20 du logement en V et par la lame élastique 15, laissant ainsi le passage à la fibre.

Le mode de réalisation particulier du moyen 2 de maintien représenté sur les figures 3 à 5 permet l'enlèvement de la fibre optique 3 et son remplacement par une autre fibre optique (de même diamètre) ; néanmoins, la fibre optique 3 peut être définitivement immobilisée au fond du logement par collage de la lame élastique 15 dans la fente 14, collage que l'on peut réaliser en injectant de la colle dans les logements 16 et 17. Sur les figures 3 à 5, on voit également la rainure longitudinale 9 placée comme on l'a indiqué dans la description de la figure 2.

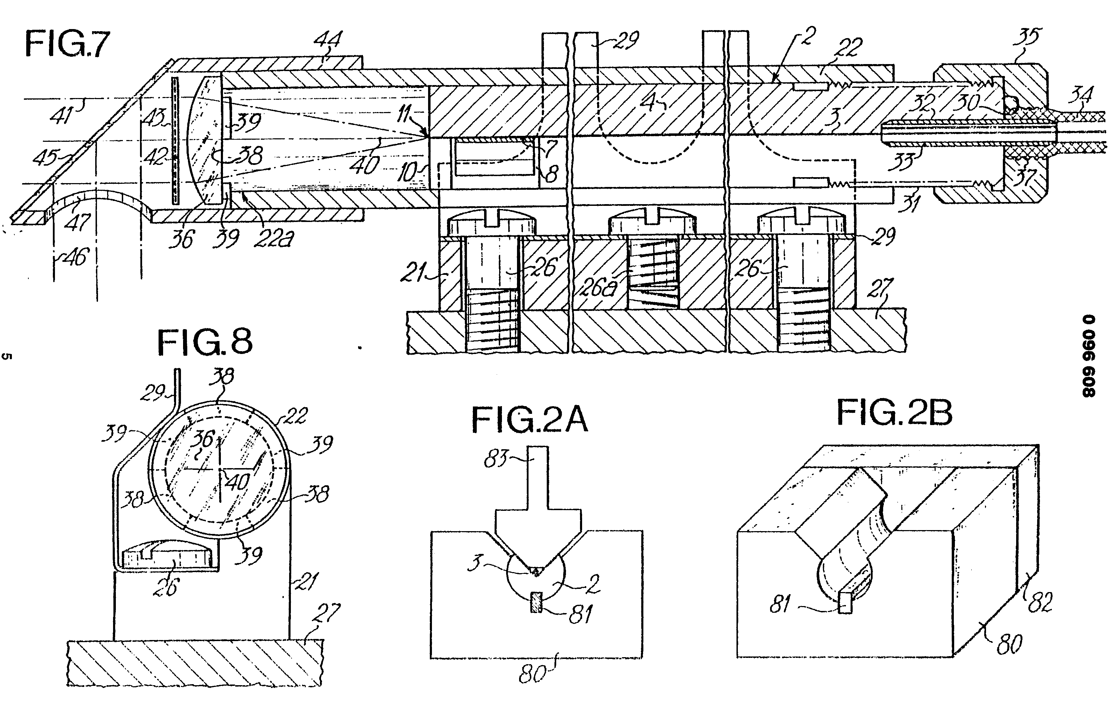

Sur la figure 6, on a représenté schématiquement une vue en coupe transversale du moyen 2 de maintien de la figure 1 mis en place sur un support 21. On pourrait bien entendu utiliser le moyen de maintien de la figure 3. Une vue longitudinale de l'ensemble composé du moyen de maintien et du support est donnée sur la figure 7. Le moyen 2 de maintien est étroitement enveloppé par un fourreau 22 qui se présente comme un tube de diamètre intérieur égal au diamètre du corps 4. Ce tube est prévu pour présenter une certaine élasticité. Il est par ailleurs privé d'un secteur légèrement supérieur à 90°, par exemple un secteur de l'ordre de 100°. Le moyen 2 de maintien est disposé dans le fourreau 22 de manière que le logement en V ouvert à 90° soit inclus dans ledit secteur. De plus, une clavette longitudinale 23 est rendue solidaire du fourreau 22 et prévue pour occuper la rainure longitudinale 9 du corps 4, de manière à immobiliser en rotation le moyen 2 de maintien. Cette clavette est disposée suivant le plan bissecteur intérieur 12d dudit secteur, plan qui coïncide avec le plan bissecteur intérieur du logement en V lorsque le moyen 2 de maintien est disposé dans le fourreau 22.

A titre indicatif et non limitatif, le diamètre du corps 4 est de 6 mm, l'épaisseur du fourreau 22 est de 1 mm et le corps 4 ainsi que le fourreau 22 sont réalisés en métal ou bien par moulage, à partir d'une résine polymérique.

Le support 21 est pourvu de deux faces planes orthogonales 24 et 25 et fixé, à l'aide de vis 26, sur une plaque 27 de référence taraudée à cet effet. L'intersection des deux faces planes orthogonales 24 et 25 est chanfreinée à 45° ou usinée de manière qu'une rainure longitudinale 28 apparaisse à sa place dans le support 21, ceci pour éviter tout contact entre la plaquette 7 et le support 21 ou entre ce dernier et la fibre optique 3, lorsque le moyen 2 de maintien est mis en place sur le support 21. Cette mise en place est effectuée en faisant coïncider les plans orthogonaux 5 et 6 définissant le logement, respectivement avec les faces planes orthogonales 24 et 25. La coïncidence entre ces dernières et les deux plans orthogonaux 5 et 6 est maintenue grâce à un moyen élastique tel qu'une lame-ressort 29 rendue solidaire du support 21 et venant appuyer sur le fourreau 22 suivant le plan bissecteur intérieur 12d dudit secteur. La lame-ressort 29 est par exemple maintenue sur le support 21 à l'aide desdites vis 26 qui traversent alors des perçages 29a et 21a respectivement pratiqués dans la lame-ressort 29 et le support 21. Le moyen 2 de maintien et le fourreau 22 forment un ensemble amovible qui peut être séparé du support 21 après soulèvement de la lame-ressort 29.

Sur la figure 7, on a représenté schématiquement un mode de réalisation particulier du collimateur optique objet de l'invention. Il comprend le moyen 2 de maintien de la fibre optique 3, pourvu du corps 4 et placé dans le fourreau 22, et le support 21 sur lequel le moyen 2 de maintien est positionné et maintenu en place grâce à la lame-ressort 29, comme on l'a expliqué à propos de la figure 6 qui est une vue en coupe transversale de la figure 7, au niveau du méplat 8. On voit sur cette figure 7 que la lame-ressort 29 a une forme allongée et vient appuyer sur une grande partie de la longueur du fourreau 22. Les fixations de cette lame-ressort 29 sur le support 21 et de ce dernier sur la plaque 27 de référence sont assurées par deux vis 26. Une autre vis 26a, placée entre ces deux vis 26, maintient également la lame-ressort 29 sur le support 21 qui est taraudé à cet effet.

Dans l'exemple représenté sur la figure 7, la plaque 27 de référence est horizontale. Le moyen 2 de maintien et la fibre optique 3 le sont également et les faces planes 24 et 25 du support 21 sont respectivement horizontale et verticale, comme le montre la figure 6.

Le fourreau 22 et le corps 4 ont sensiblement la même longueur. La fibre optique 3 a une extrémité 11 dans le plan de l'extrémité 10 du corps 4. Une extrémité 22a du fourreau 22 dépasse de cette dernière. Sur cette extrémité 22a est fixée une lentille convergente 36. Le montage de cette lentille et son réglage seront expliqués par la suite. Le pourtour du corps 4 est fileté par exemple sur le tiers de la longueur dudit corps, à partir de l'autre extrémité 30 de celui-ci. Ainsi le fourreau 22 laisse-t-il à découvert une partie filetée 31 du corps 4 au voisinage de cette autre extrémité 30. Le corps 4 comporte un alésage 32 débouchant à cette autre extrémité 30 et centré sur l'axe du corps 4. Une goupille fendue à serrage élastique 33 est montée dans cet alésage 32. Une fois le réglage de la lentille effectué, une gaine protectrice 34 est emmanchée par déformation sur la goupille 33 ; une bague 35 taraudée au même pas que le filetage de la partie 31 du corps 4 est vissée sur cette partie 31. Cette bague 35 est pourvue en son centre d'un trou taraudé 37 permettant le passage de la gaine 34 et l'impression d'un léger filet de retenue sur cette gaine 34 lors du vissage de la bague 35 sur le corps 4.

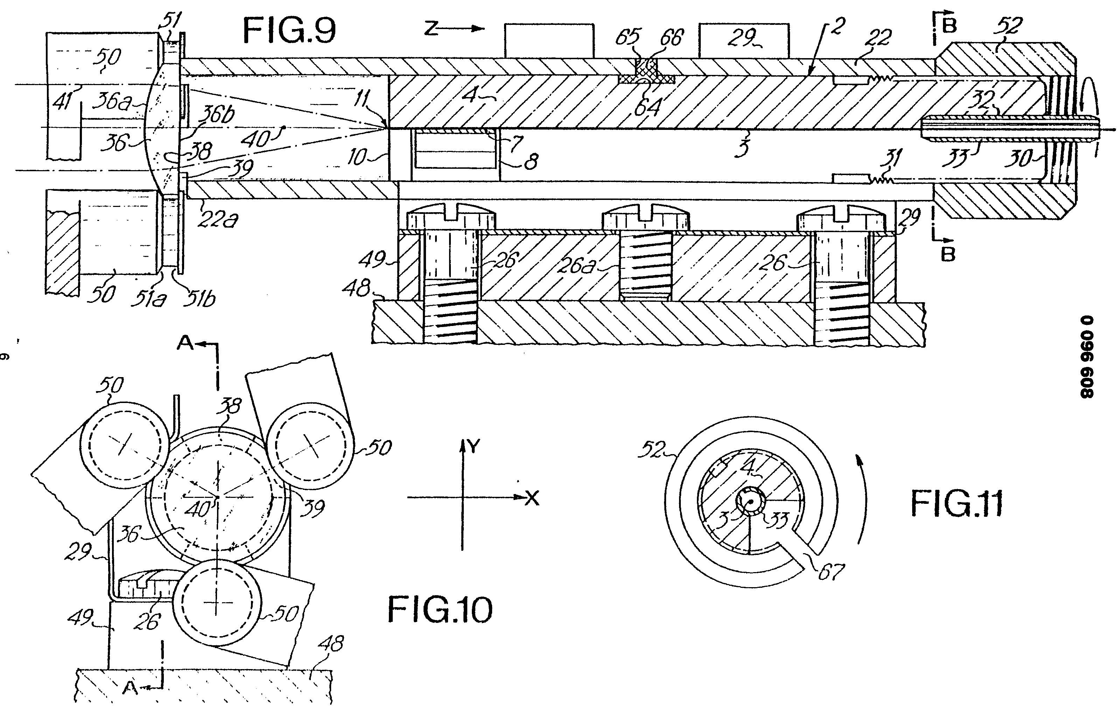

Le fourreau 22 est terminé, en son extrémité 22a portant la lentille 36, par trois secteurs 38 à 120° les uns des autres, séparés par trois décrochements 39. Ceci se voit également sur la figure 8 qui montre la lentille 36 vue de face. Cette lentille 36 est collée sur les secteurs 38 après avoir été correctement positionnée sur ceux-ci à l'aide d'un banc de réglage, comme on le verra par la suite. Les trois décrochements 39 permettent la préhension de la lentille 36 sur le banc de réglage. Lorsque la lentille 36 est correctement positionnée par rapport à la fibre optique 3, l'axe optique de la lentille coïncide avec l'axe 40 de la fibre et un faisceau lumineux conique émis par cette fibre est alors transformé par la lentille en un faisceau lumineux 41 dont l'axe est celui de la fibre et qui demeure sensiblement parallèle jusqu'à une certaine distance de cette fibre.

Dans une variante de réalisation du collimateur objet de l'invention, une lame 42 d'atténuation du faisceau lumineux 41 issu de la lentille 36 est disposée devant celle-ci, par exemple perpendiculairement à son axe optique. (La lame 42 peut ne pas être perpendiculaire à cet axe optique). Cette lame 42 est par exemple glissée dans une fente 43 pratiquée dans un organe 44 creux et emboîtable sur l'extrémité 22a du fourreau 22. Sur cet organe 44, on peut également monter une lame 45 semi-transparente, par exemple en verre, inclinée à 45° par rapport à l'axe du faisceau 41 issu de la lentille, de manière à prélever une partie 46 dudit faisceau 41, cette partie 46 étant extraite du collimateur à l'aide d'une ouverture 47 pratiquée dans ledit organe creux 44. Ce dernier est bien entendu monté sur le collimateur après réglage de celui-ci.

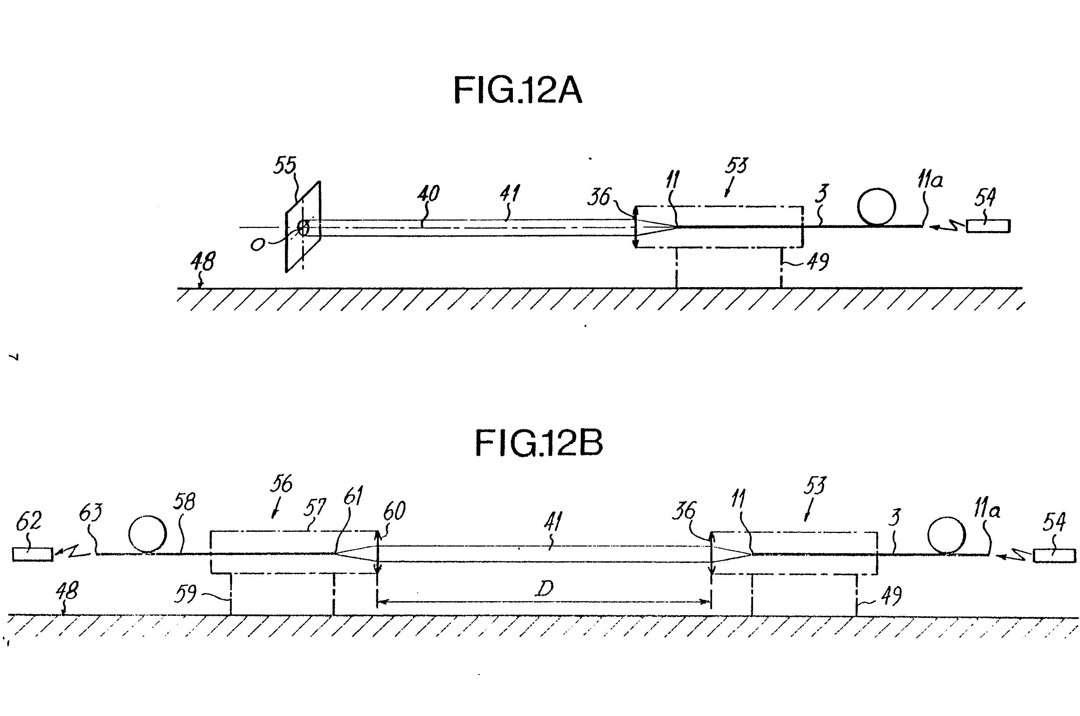

Sur la figure 9, on a représenté schématiquement une partie amovible du collimateur de la figure 7, cette partie comprenant la fibre 3, le moyen 2 de maintien, le fourreau 22 et la lentille 36. Le moyen 2 de maintien de la fibre optique 3, placé dans le fourreau 22, est disposé dans un banc de réglage comportant une plaque horizontale 48 de référence, sur laquelle est monté un support 49 identique au support 21 de la figure 7. Le moyen 2 de maintien est maintenu horizontalement sur ce support par une lame-ressort 29. L'extrémité 11 de la fibre optique 3 est dans le plan de l'extrémité 10 du corps 4. Comme indiqué précédemment, l'extrémité 22a du fourreau dépasse de l'extrémité 10 du corps 4. La lentille convergente est posée verticalement contre les trois secteurs 38 espacés des trois décrochements 39. Elle est maintenue dans cette position par trois doigts 50 à serrage concentrique, faisant partie d'un dispositif non représenté, connu dans l'état de la technique, pourvu de moyens de micro-déplacements de l'ensemble des trois doigts selon deux axes orthogonaux X et Y appartenant à un plan vertical perpendiculaire à l'axe de la fibre, comme on le voit sur la figure 10 qui montre la lentille 36 vue de face. Les trois doigts 50 sont à 120° les uns des autres. Revenant à la figure 9 qui est la coupe AA de la figure 10, les trois doigts sont chacun pourvus d'une gorge 51 dans laquelle est prise la lentille.

A titre indicatif et non limitatif, cette lentille comporte un pourtour cylindrique ainsi qu'une face convexe 36a et une face plane 36b qui encadrent ce pourtour et chaque gorge 51 est pourvue d'une paroi inclinée 51a et d'une paroi plane 51b prévues pour maintenir respectivement la face convexe 36a et la face plane 36b.

Au lieu de trois secteurs à 120°, l'extrémité 22a du fourreau pourrait comporter quatre secteurs formant entre eux des angles de 90° dont l'un coïnciderait avec ledit V à 90°, ces secteurs étant espacés par quatre décrochements et l'on utiliserait alors un dispositif de préhension de la lentille muni de quatre doigts à 90° les uns des autres, de manière à pouvoir positionner le moyen de maintien sur son support dans un sens pour lequel la lentille est à gauche du support (cas de la figure 7) et dans un sens pour lequel cette lentille est à droite dudit support (position de la lentille contraire à celle qu'elle occupe sur la figure 7).

Du côté de l'autre extrémité 30 du corps 4, la goupille fendue à serrage élastique 33 est déjà mise en place mais la gaine 34 et la bague 35 ne le sont pas encore. A la place de la bague 35, un bouton taraudé fendu 52 est vissé sur la partie filetée 31 du corps 4, de façon à toucher le fourreau 22. Le bouton 52 est représenté sur la figure 11 qui est la coupe BB de la figure 9. Ce bouton 52 est fendu car il doit pouvoir être introduit et enlevé pour le réglage selon un axe Z défini par la suite, la fente de ce bouton chevauchant au passage la fibre optique en place. (Cette fente peut être plus large que la gaine, ce qui permet le montage du bouton 52 en ayant mis en place la gaine 34, la bague 35 étant légèrement glissée en arrière).

Le réglage de la lentille 36 est effectué de la manière suivante : sur la figure 12A est représentée schématiquement ladite partie amovible du collimateur de la figure 7, placée sur le banc de réglage par l'intermédiaire du support 49, cette partie amovible, référencée 53, comprenant la fibre 3, le moyen de maintien 2 (non représenté), le fourreau 22 (non représenté) et la lentille 36. De la lumière d'une source lumineuse 54 est injectée dans la fibre, à l'autre extrémité 11a de celle-ci. Une mire 55, représentée en perspective, est disposée perpendiculairement à l'axe 40 de la fibre et de façon que le centre O de cette mire soit sur cet axe. Au moyen de micro-déplacements de l'ensemble des doigts (non représentés sur la figure 12A) selon les axes X et Y (figure 10), on cherche à centrer le faisceau lumineux 41 sur le point O, centre de la mire 55. La lentille 36 est alors fixée, par exemple par collage, sur les secteurs 38 du fourreau (figure 10).

A une distance D donnée de la lentille 36, un collimateur 56 de réglage est disposé horizontalement sur la plaque de référence 48, comme le montre schématiquement la figure 12B. Ce collimateur 56 de réglage se compose par exemple d'un corps 57 pourvu d'un logement en V à 90° au fond duquel est maintenue une autre fibre optique 58 et qui repose sur un support 59 adapté, comme on l'a expliqué à propos de la figure 6. Une lentille convergente 60 est prévue devant une extrémité 61 de l'autre fibre 58 pour y injecter une lumière incidente, cette lumière étant reçue par un photodétecteur 62 placé à l'autre extrémité 63 de l'autre fibre 58. Le collimateur 56 de réglage est disposé sur la plaque de référence 48 de manière que sa lentille 60 et la lentille 36 dont on veut régler la position soient séparées par la distance D et que les axes des fibres optiques 3 et 58 coïncident. On peut ainsi injecter au moins une partie du faisceau lumineux 41 issu de la lentille 36 dans l'autre fibre optique 58.

A l'aide du bouton taraudé 52 représenté sur la figure 9, on déplace alors le corps 4 par rapport au fourreau 22 selon un axe Z parallèle à l'axe de la fibre optique 3, ce qui fait ainsi varier la distance entre l'extrémité 11 de la fibre optique 3 et la lentille 36. On fait varier cette distance jusqu'à obtenir un maximum d'intensité lumineuse dans le photodétecteur 62. (Suivant le sens du pas du filetage de la partie 31 du corps 4, il existe un sens de rotation du bouton taraudé 52 qui permet d'écarter le corps 4 de la lentille 36, en maintenant le bouton taraudé 52 contre le fourreau 22. Ledit maximum peut ainsi être recherché en partant d'une distance suffisamment courte entre le corps 4 et la lentille 36 et en augmentant progressivement cette distance. Lorsque la distance correspondant audit maximum est dépassée du fait d'une rotation trop rapide du bouton taraudé 52, on effectue un rapprochement du corps 4 et de la lentille 36 en dévissant le bouton 52 puis en poussant le corps 4 dans le fourreau 22 et l'on recommence à écarter le corps 4 de la lentille 36 en tournant le bouton taraudé 52).

Ledit maximum étant obtenu, on rend le fourreau 22 solidaire du corps 4 (figure 9), par exemple en injectant une résine de collage dans une cavité 64 du corps 4, par l'intermédiaire d'un perçage 65 pratiqué dans le fourreau 22 et prévu pour communiquer avec la cavité 64, de manière à former après séchage un rivet 66 immobilisant le fourreau 22 par rapport au moyen 2 de maintien. Le bouton 52 taraudé et fendu est alors dévissé puis enlevé grâce à sa fente 67 qui laisse passer la fibre 3 et l'on met ensuite en place la gaine 34 et la bague 35 (figure 7). Le collimateur selon l'invention ainsi réglé est prêt à être utilisé. Les différentes phases du réglage que l'on vient d'expliquer pourraient être automatisées.

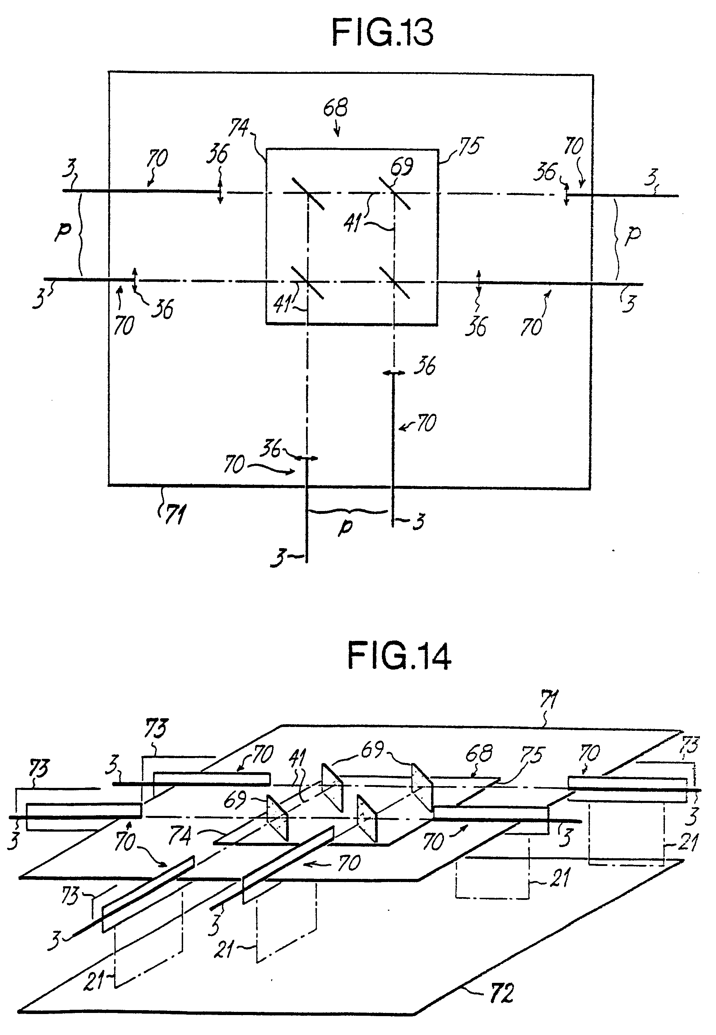

Le collimateur pour fibre optique objet de l'invention s'applique, comme on l'a déjà indiqué, à la réalisation de dispositifs de commutation optique. Sur la figure 13, on a représenté schématiquement en vue de dessus, un exemple d'un tel dispositif de commutation optique. Sur la figure 14, ce dispositif est représenté schématiquement en perspective. Ce dispositif de commutation optique comprend une matrice 68, à M lignes et N colonnes, d'organes 69 de déflexion de lumière escamotables et une pluralité de collimateurs 70 selon l'invention. Sur les figures 13 et 14, M et N sont égaux à 2. Chacun des collimateurs 70 comprend une fibre optique 3, une lentille 36 (figure 13) et un support 21 (figure 14). Les collimateurs 70 selon l'invention permettent de positionner chaque fibre optique 3 à l'intersection d'un plan optique horizontal 71, défini par rapport à une plaque ou platine 72 de référence et parallèle à cette plaque, et d'un plan vertical 73, chaque intersection définissant une ligne ou une colonne de la matrice. Les organes 69 se trouvent, lorsqu'ils ne sont pas escamotés, aux intersections des lignes et des colonnes de la matrice.

Les plans verticaux 73 associés aux lignes de la matrice sont parallèles et séparés d'une distance p définissant le pas de la matrice. Il en est de même pour les plans verticaux 73 associés aux colonnes de la matrice. Les collimateurs 70 sont disposés de façon que les lignes de la matrice soient perpendiculaires à ses colonnes et ces collimateurs reposent bien entendu sur la plaque 72 grâce à leurs supports 21. Tout faisceau lumineux 41 issu d'une fibre optique 3 se propage dans le plan optique horizontal 71. Chaque organe 69 de déflexion de lumière permet d'envoyer un faisceau lumineux issu de la fibre correspondant à la ligne de cet organe sur la fibre correspondant à la colonne dudit organe et réciproquement. Ces organes sont par exemple conformes à ceux qui sont décrits dans la demande de brevet français n° 8102883 du 13 février 1981. Ces organes sont par exemple commandés par des dispositifs à électro-aimants connus dans l'état de la technique, disposés en dessous desdits organes 69 et non représentés. On pourrait également commander ces organes par des dispositifs bistables électromagnétiques décrits dans la demande de brevet français n° 8204198 du 12 mars 1982.

Chaque ligne de la matrice 68 peut être associée à deux collimateurs 70 placés en regard l'un de l'autre et séparés par la matrice, ce qui permet d'utiliser le dispositif de commutation optique des figures 13 et 14 en tant que concentrateur-distributeur optique matriciel. En effet, on peut alors établir des communications optiques bidirectionnelles entre les fibres 3 associées aux lignes de la matrice et placées d'un côté 74 de celle-ci et les fibres 3 associées aux colonnes de cette matrice et l'on peut établir des communications optiques unidirectionnelles à partir des fibres 3 également associées aux lignes de la matrice mais placées de l'autre côté 75 de cette matrice, vers les fibres 3 associées aux lignes de la matrice et placées dudit côté 74 de celle-ci. Les organes de déflexion de lumière sont, dans ce cas, choisis de façon à transmettre, au moins en partie, la lumière émise par les fibres situées dudit autre côté 75 et, bien entendu, à réfléchir au moins en partie la lumière émise par les fibres situées dudit côté 74 et par les fibres associées aux colonnes de la matrice, de façon qu'une fibre correspondant à une ligne et placée dudit côté 74 de la matrice puisse simultanément recevoir un faisceau lumineux provenant d'une fibre associée à une colonne de la matrice et un autre faisceau lumineux provenant de la fibre située en face d'elle, de l'autre côté 75 de la matrice. La gestion des communications peut être effectuée à l'aide d'une partie des faisceaux issus des fibres utilisées pour les communications bidirectionnelles et extraits de ces fibres par des lames semi-transparentes, comme on l'a expliqué dans la description de la figure 7.

Enfin, les collimateurs 70 correspondant à des rangées d'un même type de la matrice 68 et placés d'un même côté de cette matrice peuvent être régulièrement décalés les uns par rapport aux autres de façon qu'un faisceau lumineux qui relie un collimateur à un autre collimateur ait une longueur, comptée entre ces derniers, indépendante du choix dudit collimateur et dudit autre collimateur. Plus précisément, les extrémités des fibres 3 en regard de la matrice peuvent présenter un décalage de pas à 45°, de manière que tous les faisceaux reliant entre elles, soit deux fibres séparées par la matrice et correspondant à une même ligne, soit une fibre correspondant à une ligne et une fibre correspondant à une colonne, aient la même longueur.

## Revendications

1. Collimateur pour fibre optique, comprenant :
   un moyen (2) de maintien d'une extrémité de fibre optique (3), et
   un moyen optique (36) rendu fixe par rapport au moyen de maintien, en étant positionné en regard de l'extrémité de la fibre optique de façon telle qu'il puisse transformer un faisceau lumineux issu de cette dernière en un faisceau lumineux sensiblement parallèle dont l'axe coïncide avec celui de cette extrémité de fibre, caractérisé en ce que le moyen (2) de maintien comporte un logement longitudinal en forme de V au fond duquel est maintenue l'extrémité de la fibre optique et en ce que ledit collimateur comporte en outre un support (21) prévu pour recevoir de manière amovible le moyen (2) de maintien, ce support comportant deux faces planes délimitant un dièdre convexe en forme de V de même angle d'ouverture que celui du logement en V du moyen de maintien, de façon à assurer la réception dudit moyen de maintien sur le support par emboîtement des faces planes du dièdre en V dudit support contre les faces latérales correspondantes du logement en V du moyen de maintien, les faces planes délimitant le dièdre du support étant par ailleurs usinées à leur intersection de façon que le support ne puisse entrer en contact avec la fibre lorsque ce dernier est emboîté dans le logement en V du moyen de maintien, d'où il résulte que l'axe de ladite extrémité de fibre optique, et par conséquent celui du faisceau parallèle émergeant dudit moyen optique, sont ainsi susceptibles de s'étendre le long d'une direction bien définie par rapport audit support, parallèle à l'arête du dièdre de ce dernier.

2. Collimateur selon la revendication 1, caractérisé en ce que la position relative de l'extrémité de la fibre (3) et du moyen optique (36) est celle qui minimise, à une distance donnée du moyen optique (36), la section transversale du faisceau lumineux issu de la fibre et transformé par ce moyen optique.

3. Collimateur selon l'une quelconque des revendications 1 et 2, caractérisé en ce qu'il comprend en outre un fourreau (22) contenant le moyen (2) de maintien et ouvert longitudinalement de manière à laisser apparaître ledit logement en V dudit moyen de maintien en ce que le moyen optique (36) est fixé à ce fourreau et en ce que ledit fourreau (22) est fixé au moyen (2) de maintien.

4. Collimateur selon la revendication 3, caractérisé en ce que le moyen (2) de maintien, le logement et le fourreau (22) sont rectilignes et orientés selon un même axe, en ce que le logement en V débouche sur une extrémité (10) du moyen (2) de maintien et en ce que le moyen optique (36) est une optique convergente montée sur le fourreau (22), en regard de ladite extrémité (10) et de façon que l'axe optique de cette optique convergente soit dans le prolongement de l'axe de la fibre optique (3) maintenue dans le logement en V.

5. Collimateur selon l'une quelconque des revendications 1 à 4, caractérisé en ce qu'il comprend en outre un moyen (45) pour prélever une partie dudit faisceau lumineux issu de la fibre optique (3) et transformé par le moyen optique (36).

6. Collimateur selon l'une quelconque des revendications 1 à 5, caractérisé en ce qu'il comprend en outre un moyen (42) d'atténuation dudit faisceau lumineux issu de la fibre optique (3) et transformé par le moyen optique (36).

7. Collimateur selon l'une quelconque des revendications 1 à 6, caractérisé en ce que ledit logement est en forme de V ouvert à 90° et en ce que les deux faces planes (24, 25) dudit support (21) sont orthogonales.

8. Application du collimateur selon l'une quelconque des revendications 1 à 7 à la réalisation de dispositifs de commutation optique comprenant une matrice (68) à M lignes et N colonnes d'organes (69) de déflexion de lumière escamotables et une pluralité de tels collimateurs (70) disposés en regard des lignes et des colonnes de la matrice (68), de façon qu'un faisceau lumineux issu d'un collimateur associé à une ligne de la matrice (68) puisse parvenir à un autre collimateur associé à une colonne de la matrice (68), et réciproquement, grâce à l'organe (69) de déflexion de lumière placé à l'intersection de ladite ligne et de ladite colonne.

9. Application selon la revendication 8, caractérisé en ce que chaque ligne de la matrice (68) est associée à deux collimateurs (70) placés en regard l'un de l'autre et séparés par la matrice (68), de façon à pouvoir réaliser des communications optiques entre les fibres optiques des collimateurs associés aux lignes de la matrice et placés d'un côté de la matrice et les fibres optiques des collimateurs associés aux colonnes de la matrice, et des communications optiques entre les fibres desdits collimateurs associés aux lignes de la matrice et placés dudit côté de cette matrice et les fibres des collimateurs également associés aux lignes de la matrice et placés de l'autre côté de cette matrice.

## Claims

1. Collimator for an optical fibre, comprising : a means (2) for retaining one end of an optical fibre (3), and an optical means (36) made fixed relative to the retaining means, by being positioned opposite the end of the optical fibre in such a manner that it may convert a light beam emanating from the latter into a substantially parallel light beam, the axis of which coincides with that of this fibre end, characterized in that the retaining means (2) comprises a longitudinal recess in the form of a V, at the base of which the end of the optical fibre is retained, and in that the said collimator further comprises a support (21) provided to receive the retaining means (2) in a removable manner, this support including two plane faces delimiting a convex dihedral in the form of a V having the same aperture angle as that of the V-shaped recess of the retaining means, in such a manner as to ensure the reception of the said retaining means on the support by interlocking of the plane faces of the V-shaped dihedral of the said support against the corresponding lateral faces of the V-shaped recess of the retaining means, the plane faces delimiting the dihedral of the support being moreover machined at their intersection in such a manner that the support cannot enter into contact with the fibre when the support is fitted in the V-shaped recess of the retaining means, whence it follows that the axis of the said optical fibre end, and consequently that of the parallel beam emerging from the said optical means, are thus capable of extending along a direction which is well defined relative to the said support, parallel to the edge of the dihedral of the latter.

2. Collimator according to Claim 1, characterized in that the relative position of the end of the fibre (3) and of the optical means (36) is that which minimises, at a given distance from the optical means (36), the transverse cross-section of the light beam emanating from the fibre and converted by this optical means.

3. Collimator according to either one of Claims 1 and 2, characterized in that it further comprises a sheath (22) containing the retaining means (2) and longitudinally open in such a manner as to allow the said V-shaped recess of the said retaining means to appear, in that the optical means (36) is fixed to this sheath, and in that the said sheath (22) is fixed to the retaining means (2).

4. Collimator according to Claim 3, characterized in that the retaining means (2), the recess and the sheath (22) are rectilinear and oriented according to a single axis, in that the V-shaped recess opens onto an end (10) of the retaining means (2), and in that the optical means (36) is a converging optical system mounted on the sheath (22), opposite the said end (10) and in such a manner that the optical axis of this converging optical system is in the extension of the axis of the optical fibre (3) retained in the V-shaped recess.

5. Collimator according to any one of Claims 1 to 4, characterized in that it further comprises a means (45) for picking off a part of the said light beam emanating from the optical fibre (3) and converted by the optical means (36).

6. Collimator according to any one of Claims 1 to 5, characterized in that it further comprises a means (42) for attenuating the said light beam emanating from the optical fibre (3) and converted by the optical means (36).

7. Collimator according to any one of Claims 1 to 6, characterized in that the said recess is in the form of a 90° open V, and in that the two plane faces (24, 25) of the said support (21) are orthogonal.

8. Application of the collimator according to any one of Claims 1 to 7 for the construction of optical switching devices comprising a matrix (68) having M lines and N columns of retractable light-deflecting elements (69) and a plurality of such collimators (70) disposed opposite the lines and the columns of the matrix (68), in such a manner that a light beam amanating from a collimator associated with a line of the matrix (68) can arrive at another collimator associated with a column of the matrix (68), and vice versa, by virtue of the light-deflecting element (69) located at the intersection of the said line and the said column.

9. Application according to Claim 8, characterized in that each line of the matrix (68) is associated with two collimators (70) located opposite one another and separated by the matrix (68), in such a manner as to be able to effect optical communications between the optical fibres of the collimators associated with the lines of the matrix and located on one side of the matrix and the optical fibres of the collimators associated with the columns of the matrix, and optical communications between the fibres of the said collimators associated with the lines of the matrix and located on the said side of this matrix and the fibres of the collimators likewise associated with the lines of the matrix and located on the other side of this matrix.

### Patentansprüche

1. Faseroptischer Kollimator, mit einem Haltemittel (2) für ein Ende der optischen Faser (3), und einer optischen Einrichtung (36), die im Bezug auf das Haltemittel festgelegt ist, indem sie dem Ende der optischen Faser gegenüberliegend derart positioniert ist, daß sie ein von letzterer ausgehendes Lichtbündel in ein im wesentlichen paralleles Lichtbündel umwandeln kann, dessen Achse mit derjenigen des Faserendes zusammenfällt, dadurch gekennzeichnet, daß das Haltemittel (2) eine längliche Aufnahme in der Form eines V umfaßt, auf dessen Boden das Ende der optischen Faser festgehalten ist, und daß der Kollimator eine zur bewegbaren Aufnahme des Haltemittels (2) vorgesehene Stütze (21) umfaßt, die zwei ebene Flächen aufweist, die einen konvexen Dieder in der Form eines V mit dem gleichen Öffnungswinkel wie derjenige der Aufnahme in Form eines V des Haltemittels derart begrenzen, daß die Aufnahme des Haltemittels auf der Stütze durch Einfügen der ebenen Seiten des Dieders in der Form eines V der Stütze an die entsprechenden seitlichen Seiten der Aufnahme in der Form eines V des Haltemittels sichergestellt wird, daß die ebenen Seiten, die den Dieder der Stütze begrenzen, übrigens an ihrer Schnittstelle derart bearbeitet sind, daß die Stütze nicht in Berührung mit der Faser gelangen kann, wenn diese in die Aufnahme in der Form eines V des Haltemittels eingebracht ist, woraus sich ergibt, daß sich die Achse des Endes der optischen Faser und infolgedessen auch diejenige des parallelen Bündels, welches aus der optischen Einrichtung austritt, längs einer Richtung erstrecken kann, die in Bezug auf die Stütze wohlbestimmt und parallel zu der Kante des Dieders der Stütze ist.

2. Kollimator nach Anspruch 1, dadurch gekennzeichnet, daß die relative Lage des Endes der Faser (3) und der optischen Einrichtung (36) eine solche ist, die in einem gegebenen Abstand von der optischen Einrichtung (36) den Querschnitt des von der Faser ausgesandten und der optischen Einrichtung umgewandelten Lichtbündels minimal macht.

3. Kollimator nach Anspruch 1 oder 2, dadurch gekennzeichnet, daß er ferner eine Hülse (22) aufweist, die das Haltemittel (2) enthält und in Längsrichtung derart offen ist, daß die Aufnahme in der Form eines V des Haltemittels frei ist, daß die optische Einrichtung (36) an der Hülse befestigt ist und daß die Hülse (22) an dem Haltemittel (2) befestigt ist.

4. Kollimator nach Anspruch 3, dadurch gekennzeichnet, daß das Haltemittel (2), die Aufnahme und die Hülse (22) geradlinig und längs derselben Achse ausgerichtet sind, daß die Aufnahme in Form eines V an einem Ende (10) des Haltemittels (2) mündet und daß die optische Einrichtung (36) eine Sammeloptik ist, die dem Ende (10) gegenüberliegend an der Hülse (22) derart angebracht ist, daß die optische Achse dieser Sammeloptik in der Verlängerung der Achse der in der Aufnahme in der Form eines V festgehaltenen optischen Faser (3) liegt.

5. Kollimator nach einem der Ansprüche 1 bis 4, dadurch gekennzeichnet, daß er ferner ein Mittel (45) aufweist, um einen Anteil des von der optischen Faser (3) ausgesandten und durch die optische Einrichtung (36) umgewandelten Lichtbündels abzunehmen.

6. Kollimator nach einem der Ansprüche 1 bis 5, dadurch gekennzeichnet, daß er ferner ein Dämpfungsmittel (32) für das von der optischen Faser (3) ausgesandte und durch die optische Einrichtung (36) umgewandelte Lichtbündel aufweist.

7. Kollimator nach einem der Ansprüche 1 bis 6, dadurch gekennzeichnet, daß die Aufnahme in der Form eines V, eine mit einem Öffnungswinkel von 90° ist und daß die zwei ebenen Seiten (24, 25) der Stütze (21) orthogonal sind.

8. Anwendung des Kollimators nach einem der Ansprüche 1 bis 7 zur Ausführung von optischen Schaltervorrichtungen, die eine Matrix (68) mit M-Zeilen und N-Spalten von einziehbaren Lichtablenkorganen (69) und eine Vielzahl derartiger Kollimatoren (70) aufweist, die den Zeilen und Spalten der Matrix (68) derart gegenüberliegend angeordnet sind, daß ein von einem Kollimator ausgehendes und einer Zeile der Matrix (68) zugeordnetes Lichtbündel zu einem anderen Kollimator, der einer Spalte der Matrix (68) zugeordnet ist und umgekehrt dank des an der Schnittstelle der Zeile und der Spalte angeordneten Lichtablenkorgans (69) gelangen kann.

9. Anwendung nach Anspruch 8, dadurch gekennzeichnet, daß jede Zeile der Matrix (68) zwei Kollimatoren (70) zugeordnet ist, die einander gegenüberliegend und durch die Matrix (68) getrennt derart angeordnet sind, daß optische Verbindungen zwischen den optischen Fasern der den Zeilen der Matrix (68) zugeordneten und auf einer Seite der Matrix angeordneten Kollimatoren und den optischen Fasern der den Spalten der Matrix zugeordneten Kollimatoren hergestellt werden können, und daß optische Verbindungen zwischen den Fasern der genannten, den Zeilen der Matrix zugeordneten und auf der genannten Seite dieser Matrix angeordneten Kollimatoren und den Fasern der ebenfalls den Zeilen der Matrix zugeordneten und auf der anderen Seite dieser Matrix angeordneten Kollimatoren hergestellt werden können.

0 096 608

FIG.1

FIG.2

# FIG.3

FIG.4

FIG.5

# FIG.6

**FIG.7**

**FIG.8**

**FIG.2A**

**FIG.2B**

0 096 608 0

FIG.9

FIG.10

FIG.11

809 960 0

# FIG.12A

# FIG.12B

# FIG.13

# FIG.14